# EUROPÄISCHE PATENTSCHRIFT

(11) **EP 1 491 332 B1**
(45) Veröffentlichungstag und Bekanntmachung des Hinweises auf die Patenterteilung: **10.02.2010**
(21) Anmeldenummer: 04009475.7
(22) Anmeldetag: 22.04.2004
(51) Int. Cl.: B41C 1/10, C09D 11/00

(54) **Verfahren zum Aufbringen von Mitteln mit Flüssigkristallen auf Substrate**
Method of applying materials containing liquid crystals to a substrate
Procédé pour appliquer des matériaux contenant des cristaux liquides sur un substrat

(30) Priorität: 25.06.2003 DE 10328742
(43) Veröffentlichungstag der Anmeldung: 29.12.2004
(73) Patentinhaber: KBA-METRONIC AG, 97209 Veitshöchheim (DE)
(72) Erfinder: Schmitt, Peter, Dipl.-Phys., 97074 Würzburg (DE)
(74) Vertreter: Stiel, Jürgen

(56) Entgegenhaltungen:
- EP-A- 0 298 580
- WO-A-02/085642
- DE-A- 2 635 226
- DE-A- 4 205 713
- US-A- 5 006 170
- US-A- 5 599 412
- US-A- 5 643 357
- PATENT ABSTRACTS OF JAPAN Bd. 1998, Nr. 09, 31. Juli 1998 (1998-07-31) & JP 10 104615 A (SONY CORP), 24. April 1998 (1998-04-24)

## Beschreibung

Die Erfindung betrifft ein Verfahren zum Aufbringen von Mitteln, die Flüssigkristalle umfassen, auf Substrate.

Bekannt sind im Stand der Technik z.B. niedermolekulare, vorwiegend photochemisch polymerisierbare Flüssigkristall-Gemische bzw. deren Bestandteile. Sie sind erhältlich z.B. von der Firma Merck KGaA und sind Gegenstand z.B. der DE 198 34 162 A1 und der GB 2 280 445. Zum Teil wird die Darstellung einzelner solcher Komponenten in der Literatur beschrieben, z. B. in D.J. Broer et al., Makromol. Chem. 190, 1989, 3201-3215.

Zur Beschichtung oder Verdruckung solcher Gemische sind bisher ausschließlich Lösungen auf der Basis organischer Lösungsmittel, z. B. Toluol, herangezogen worden. Die Verarbeitung lösungsmittelfreier Flüssigkristall-Systeme in Beschichtungs- oder Druckverfahren ist nicht bekannt.

Durch die US 5 599 412 A ist ein Verfahren zum Auftragen von Flüssigkristalle umfassenden Mitteln auf Substrate bekannt. Dabei werden Plättchen eines reinen cholesterischen Flüssigkristallpolymers erzeugt, die dann zerkleinert und mit einem Fluid vermengt werden, um so eine cholesterische Flüssigkristall-Farbe zu schaffen. Diese kann dann wie gewöhnliche Tinte in entsprechenden Verfahren verwendet werden.

Zur Erreichung der Verarbeitbarkeit in Beschichtungs- und Druckverfahren ist es weiterhin bekannt Additive zuzusetzen. Bei diesen handelt es sich entweder um Lösungsmittel, wie z. B. Toluol, Essigester, Ethanol und Butylacetat, die alleine oder in Verbindung mit Dispergierhilfsmitteln und Entschäumern wie z. B. Polyvinylpyrrolidon, Polyvinylalkohol, Celluloseether, Gelatine, Byk 055 und Byk 057 (Hersteller: Firma Byk, Wesel) sowie evtl.

Wasser eingesetzt werden. Oder es handelt sich um bei Raumtemperatur pastöse Mischungen, die zwar frei von organischen Lösungsmitteln sind, dafür aber Dispergiermittel vom Typ der Alkenyl- oder Alkylbernsteinsäurederivate enthalten.

Beschichtungsverfahren auf der Basis von flüssigkristallinen Polymeren sind ebenfalls bekannt. Wie z. B. in DE 690 29 683 T3 beschrieben wird, werden dazu die entsprechenden flüssigkristallinen Polymere entweder auf eine Temperatur oberhalb des Glasübergangspunkts und unterhalb des Übergangspunkts in die isotrope Phase erwärmt, so daß eine fließfähige Beschaffenheit gegeben ist, oder man löst das flüssigkristalline Polymer und appliziert es in Lösung. Wie z. B. in DE 694 13 746 T2 ausgeführt wird, werden je nach Art der Polymere verschiedene Lösungsmittel eingesetzt, z. B. Chloroform, Dichlorethan, Tetrachlorethan, Trichlorethylen, Tetrachlorethylen, o-Dichlorbenzol, Tetrahydrofuran, Dimetyhylformamid, Dimethylacetamid, Dimethylsulfoxid und N-Methylpyrrolidon.

Im Falle des Einsatzes von Lösungen ist nach Verdunsten des Lösungsmittels eine weitere Wärmebehandlung zur Erzeugung und Orientierung der flüssigkristallinen Phase notwendig, ebenso wird im Falle des Aufbringens geschmolzener Polymere die gewünschte Textur durch eine entsprechende Wärmebehandlung bei einer Temperatur, bei der die polymere Verbindung eine Flüssigkristallphase zeigt, induziert. Anschließend erfolgt in beiden Fällen die glasartige Erstarrung und Fixierung durch Abkühlen auf eine Temperatur unterhalb des Glasübergangspunkts.

Die Herstellung und Verarbeitung von heißschmelzenden Druckfarben und Tinten ist Stand der Technik und Inhalt zahlreicher Patente, z. B. von DE 4205713 A1, DE 2635226 A1 und EP 0700977 A1. Diese Schmelzdruckfarben setzen sich üblicherweise aus bei Raumtemperatur festen Lösungsmitteln, Bindemitteln und optional Additiven und Farbmitteln zusammen. Im Falle der in diesem Zusammenhang wichtigen (Thermo)Heißschmelztintenstrahldruckverfahren ist die US 5,006,170 bekannt, bei der Flüssigkristallmaterialien zugrundegelegt sind.

US 5,006,170 betrifft Heißschmelztintenzusammensetzungen, die zum Tintenstrahldrucken geeignet sind und ein Färbemittel, einen Binder und ein Treibmittel umfassen. Bei einer Ausführungsform besteht der Binder aus einem Flüssigkristallmaterial, z. B. auf der Basis eines Alkyl-Thio-Beta-D-Glykosids. Entsprechende Tinten weisen Schmelzpunkte auf, die ein rasches Schmelzen der Tinte und ein rasches Verfestigen auf dem Drucksubstrat ermöglichen, wodurch hohe Druckgeschwindigkeiten möglich werden. Zusätzlich wird berichtet, daß Heißschmelztinten mit Flüssigkristallbindern ein hohes Scherverdünnungsverhalten aufweisen, was bedeutet, daß beim Scheren oder bei einer Belastung die Schmelzviskosität verringert ist. Die Tinten werden einem Scheren oder einer Belastung unterzogen, wenn sie durch die Strahldüse des Druckers verlaufen, und die Tintenviskosität wird während des Druckprozesses verringert, was eine erhöhte Druckgeschwindigkeit und auch eine verbesserte Druckqualität bewirkt, da die verringerte Viskosität der Tinte einen hohen Wechselwirkungsgrad zwischen der Tinte und dem Drucksubstrat ermöglicht.

Die von der Fa. Merck KGaA erhältlichen nematischen und chiral nematischen Flüssigkristallsysteme sind bei Raumtemperatur feste, weiße oder gelbliche, geruchlose Pulver und daher nicht verdruckbar. Durch Versetzen mit einem organischen Lösungsmittel, bevorzugt Toluol, werden isotrope Lösungen generiert, die sich durch eine besonders geringe Fließviskosität auszeichnen und sich daher hervorragend eignen zur Erzielung gleichmäßiger Druckfilme und zur Orientierung der Flüssigkristall-Moleküle in einer planaren, homogenen Grand Jean-Textur. Zudem ist über den Feststoffgehalt der Lösungen eine Steuerung der Schichtdicken der Flüssigkristall-Druckfilme möglich.

Die praktische Erprobung dieses sog. Solvensverfahrens weist eine Reihe von gravierenden Nachteilen auf.

Beispielsweise können Lösungsmittel enthaltende Flüssigkristall-Systeme nur bedingt zur Bedruckung lösungsmittelempfindlicher Substrate verwendet werden. Saugfähige Substrate wiederum, wie z. B. Papier, können zu einem ineinander verlaufenen Aussehen des Druckbildes führen, da die Farbe leicht in das Papier eindringen kann und sich, indem sie den Faserlinien folgt, darin ausbreitet.

Auch verändern sich bei Bedruckung der meisten Flüssigkristall-Filme mit lösungsmittelhaltigen Flüssigkristall-Farben häufig die erwünschten optischen Effekte wie beispielsweise Farbeffekte infolge von Diffusions- und Extraktionsprozessen. Oft müssen zur Erzielung einer ausreichend hohen Konzentration brennbare, giftige oder anderweitig schädliche Lösungsmittel wie Tetrahydrofuran, 2-Butanon, Toluol und Xylol eingesetzt werden, womit umfangreiche und kostenaufwendige maschinen- und anlagenbauliche Sicherheitsmaßnahmen erforderlich werden.

Diese betreffen insbesondere den Explosionsschutz, was die elektrische Ausrüstung des inneren Maschinenraums der Druckmaschine und des Arbeitsumfeldes betrifft, die Verwendung von Corona-Anlagen zur Vorbehandlung des Drucksubstrats oder die Verwendung von UV-Härtungsanlagen . Zudem werden hohe Gebläseleistungen zur Absaugung und Luftrückführung benötigt und wenn große Mengen an Farbe verdruckt werden, Anlagen zur Verbrennung der lösungsmittelhaltigen Abluft oder Rückgewinnung des Lösungsmittels aus Kostengründen und auf Grund von Umweltschutzerwägungen.

Im allgemeinen werden sich bei der Gegenwart von Lösungsmittel(n) und bei Verwendung von strahlungshärtenden Flüssigkristall-Mischungen der Abstand zwischen Druckwerk und UV-Trocknungsstation sowie die übrigen Dimensionen entscheidend erhöhen, was zu Lasten der Druckqualität, der Weiterverarbeitbarkeit des Druckgutes, z.B. einer Folie, der Kompaktheit, der Praktikabilität und des Designs einer Beschichtungs- oder Druckmaschine geht. Zur Erzielung reproduzierbarer Druckergebnisse sind zusätzlich Vorkehrungen gegen unzulässige Konzentrations- und Viskositätsveränderungen der Drucksubstanz infolge vorzeitiger Lösungsmittelverdampfung besonders auf den Druckwalzen zu treffen. Andernfalls würde die Qualität der Druckergebnisse variieren, im schlimmsten Fall könnten farbgebende Teile des Druckwerkes, wie z.B. Rasterwalze oder Klischee eines Flexodruckwerkes mit auskristallisierter Flüssigkristall-Farbe verstopft werden - mit entsprechenden Konsequenzen für die Dicken der erzielten Druckfilme bzw. die anisotropen, optischen Effekte.

Die mit den lösungsmittelhaltigen Flüssigkristall-Farben in Kontakt kommenden Teile müssen darüber hinaus, eine entspechende chemische Resistenz aufweisen , damit die vorzeitige Alterung etwa von Pumpenschläuchen oder die Entweichung störender Bestandteile, wie z. B. von Weichmachern, in die Flüssigkristall-Farbe unterbunden wird.

Aus Lösungsmittel-Flüssigkristall-Gemischen können sich während der Lagerung und Lieferung einzelne oder mehrere Komponenten abscheiden. Dies ist vor allem dann der Fall, wenn ein hoher Konzentrationsbereich gewählt wurde oder dem sehr gut lösenden (aromatischen) Toluol z. B. ein aliphatisches Lösungsmittel beigemengt wurde.

Auch führt die Anwesenheit von Lösungsmitteln dazu, daß, bedingt durch die Verdampfungsgeschwindigkeit der verwendeten Lösungsmittel, nur bestimmte maximale Druckgeschwindigkeiten erzielt werden können, die auch durch entsprechende Maschinenkonstruktionen nicht wesentlich gesteigert werden können. Schließlich können sich nicht nur für den Verarbeiter, sondern auch für den Anwender Nachteile ergeben, wenn durch verbleibende Restlösungsmittel eine Minderung der Druckqualität eintritt, z. B. ein verminderter Polymerisationsgrad oder eine Herabsetzung der Blockfestigkeit.

Aufgabe der Erfindung ist es, die mit der Verarbeitung von lösungsmittelhaltigen Flüssigkristall-Gemischen verbundenen Nachteile zu beseitigen und ein einfaches und in hohem Maße reproduzierbares Verfahren zum Aufbringen von Mitteln, die Flüssigkristalle umfassen, bereitzustellen.

Diese Aufgabe wird dadurch gelöst, dass das zu verdruckende Mittel innerhalb einer Auftragsvorrichtung, insbesondere einem Druckwerk, auf einer Arbeitstemperatur gehalten wird, bei der das Mittel in einem flüssigen Zustand und die im Mittel enthaltenen Flüssigkristallkomponenten in einem mesomorphen Zustand vorliegen.

Wesentlich ist es, dass die Mittel mit Flüssigkristallen während eines Auftragsprozesses, z.B. eines Beschichtungs- oder Druckprozesses bei erhöhter Temperatur in einem flüssigen Zustand gehalten werden. Typische hier verwendete Flüssigkristall-Formulierungen befinden sich bei Raumtemperatur in der festen Phase und sind somit in diesem Zustand nicht applizierbar, z.B. nicht verdruckbar.

Bringt man die Flüssigkristalle durch Temperaturerhöhung in den geschmolzenen, flüssigen Zustandsbereich, so lösen sich die einzelnen Komponenten der Mischung ohne Anwesendheit eines Lösungsmittels gewissermaßen selbst ineinander, wobei sich auf Grund der besonderen Zusammensetzung bestimmter Flüssigkristall-Mischungen eutektische Gemische bilden können, deren Schmelzpunkte niedriger liegen als die der einzelnen Komponenten.

Zur Realisierung eines Auftrags genannter Mittel eignen sich prinzipiell alle Beschichtungs- und Druckprozesse, wie sie z. B. in Tauch-, Spritz-, Walz- und Streichmaschinen, Offset-, Tiefdruck-, Flexodruck-, Buch- und Siebdruckmaschinen sowie Hot-Melt und Drop-on-Demand Tintenstrahldruckern umgesetzt werden.

Bei Verwendung von Flüssigkristall-Mischungen, wie sie beispielsweise von Merck KGaA angeboten werden, müssen die Arbeitstemperaturen der einzelnen mit der Flüssigkristall-Mischung in Kontakt kommenden Teile in Abhängigkeit der verwendeten Flüssigkristall-Mischungen beispielsweise im Bereich von 60 - 80 °C liegen, damit in der Flüssigkristallmischung einerseits der feste, kristalline Zustand mit definierter Nah- und Fernordnung der Moleküle aufgehoben ist, andererseits noch nicht die völlig isotrope, ungeordnete, flüssige Phase vorliegt.

Stattdessen wird hier bevorzugt ein Aggregatzustand zwischen der festen (bis ca. 60 °C) und der flüssigen, isotropen Phase (ab ca. 80 °C), eine sog. Mesophase, angestrebt, bei welcher die Moleküle zwar beweglich sind, die Molekülachsen aber eine geordnete Struktur ausbilden. Je nach Flüssigkristall-Mischung bzw. der chemischen Struktur der Moleküle, nach ihrem Dipolmoment und anderen Eigenschaften können sich verschiedene energetisch günstige ein-, zwei- und dreidimensionale Ordnungszustände etablieren. Makroskopisch betrachtet erscheint die Flüssigkristall-Mischung daher als Flüssigkeit, die sich mit einem der genannten Druckverfahren verarbeiten lässt, mikroskopisch betrachtet weisen deren Moleküle jedoch eine Ordnung zueinander auf.

Im Zusammenhang mit der vorliegenden Erfindung muß insbesondere zwischen den nematischen und den cholesterischen (eigentlich: chiral nematischen) Phasen unterschieden werden.

Deren Verarbeitung mit Beschichtungs- und Druckmaschinen führt zu außerordentlich interessanten optischen Effekten, die zur Herstellung von sicherheitsrelevanten Kennzeichnungen für Banknoten, Wertpapiere, Ausweise, Dokumente etc. geeignet sind.

Das erfindungsgemäße Heißschmelzverfahren zeichnet sich durch eine Reihe von maschinen und verfahrenstechnischen Vorteilen gegenüber dem auf Lösungsmitteln basierenden Verfahren aus,

Ein Vorteil des erfindungsgemäßen Heißschmelzverfahrens liegt darin, dass als Auftragsvorrichtung beispielsweise herkömmliche Druckmaschinen verwendet werden können, die mit beheizbaren Druckwalzen und beheizbaren Farbkammern ausgerüstet sind. Der Einsatz von baulichen Einrichtungen zur Absaugung und Entsorgung von Lösungsmitteldämpfen ist nicht erforderlich. Damit einhergehend ist auch eine Gefährdung des Bedieners durch Lösungsmitteldämpfe während des Betriebes ausgeschlossen.

Ein weiterer Vorteil ist die reproduzierbare Herstellung der gewünschten optischen Effekte auf den Substraten, da in dem erfindungsgemäßen Verfahren die Flüssigkristall-Konzentration während des gesamten Produktionszeitraumes konstant bleibt und nicht wie in den eingangs beschriebenen Verfahren von der Lösungsmittelkonzentration abhängt.

Vorteilhaft ist in diesem Zusammenhang auch, dass in dem erfindungsgemäßen Verfahren von Haus aus keine Regeleinheit zur Bestimmung und Konstanthaltung einer Lösungsmittelkonzentration benötigt wird, was zu einer einfacheren und damit kostengünstigeren Druckmaschine führt.

Ein weiterer Vorteil liegt darin, daß es aufgrund der Vielzahl an möglichen FlüssigkristallMischungen auch eine sehr große Anzahl an realisierbaren optischen Effekten gibt, die jeweils unterschiedliche Prozessparameter bedingen, welche durch das erfindungsgemäße Verfahren leicht und vor allem konstant eingestellt werden können. Damit eröffnen sich vorteilhafterweise eine Reihe von neuen Möglichkeiten unterschiedliche optische Effekte miteinander zu kombinieren, um so beispielsweise neue Sicherheitsmerkmale zu erzeugen.

Zur Realisierung des erfindungsgemäßen Verfahrens eignen sich alle gängigen Beschichtungsverfahren, wie z. B. Tauchen, Spritzen, Rollen, Walzen und Streichen, sowie die üblichen Druckverfahren, wie z. B. Offset-, Tief-, Flexo-, Buch-, Sieb- und Prägedruck sowie Tintenstrahldruck.

Eine besondere, beispielhaft erprobte Ausführungsform basiert auf einer Flexodruckmaschine, deren Druckwerkbestandteile, nämlich Farbkammer, Rasterwalze, Druckzylinder, Gegendruckzylinder und Presseur einzeln über entsprechende Aggregate beheizbar sind. Die Temperatur für die Wärmebehandlung wird im wesentlichen durch den mesomorphen Temperaturbereich der Flüssigkristallmischung und die Wärmestabilität bzw. ausreichende physikalische Festigkeit des Substrats festgelegt. Im Hinblick auf die Flüssigkristall-Mischung ist ein Temperaturbereich bevorzugt, in dem eine nematische oder cholesterische (chiral nematische) Phase ausgebildet ist.

In dem ausgewählten Beispiel werden in einer separaten Standard-Mischapparatur, wie z. B. einem Zwei- oder Dreiwalzenstuhl, einem Dispergieraggregat, einer Perlmühle oder einem entsprechenden Misch- und Dispergierextruder, zunächst bei einer Temperatur von bevorzugt 70 °C die jeweiligen nematogenen oder chiral nematogenen FlüssigkristallKomponenten homogenisiert und die so gewonnenen Schmelzen in Formen gegossen. Nach Erstarren zu einer festen,
mikrokristallinen Masse erfolgt eine Zerstückelung oder Pulverisierung und die Befüllung der Farbkammer entsprechend der benötigten Menge.

Es werden bevorzugt die folgenden Betriebstemperaturen eingestellt: Farbkammer: 70 °C, Rasterwalze: 80 °C, Druckylinder: 70 °C, Gegendruckzylinder: 70 °C, Presseur: 40 °C. Der Druckzylinder wird mit einem Klischee, einem Gummituch oder einer aufvulkanisierten Gummibeschichtung ausgerüstet, deren Dicken jeweils nicht mehr als 1 - 3 mm betragen, so daß ein möglichst guter Wärmeübertrag gegeben ist. Die Klischees und Gummitücher werden auf dem Druckzylinder über geeignete, bis zu einer Temperatur von ca. 70 °C gegen Schmieren beständige Klebstoffbeschichtungen (Fa. Tesa, Scapa Tapes, Lohmann), oder magnetisierbare Trägermaterialien z. B. aus Stahl, oder (zusätzlich) mechanisch verankert.

Die erhaltenen Flüssigkristall-Schmelzen zeichnen sich bei diesen Bedingungen durch niedrige Viskositäten und Oberflächenspannungen aus, welche mit der üblicher strahlungshärtender Flexodruckfarben vergleichbar sind. Im einzelnen liegen Viskositäten von nicht mehr als 0,5 Pa.s, besonders 0,1 bis < 0,4 Pa.s und Oberflächenspannungen von nicht mehr als 38 mN/m, besonders 34 bis < 36 mN/m vor. Dadurch ist bei größeren Mengen z. B eine Verarbeitbarkeit mittels Schlauchpumpen möglich.

Auch liegt ein sehr gutes Verlaufs- und Druckverhalten vor, was sich in der Ausbildung gleichmäßiger, homogener Druckschichten äußert. Vor allem kann auf den Einsatz von (polymeren) Verlaufsmitteln, Reaktivverdünnern und Lösungsmitteln verzichtet werden, deren Beimischung entweder mit einer ggf. unerwünschten Modifikation der sich auf dem Druckträger ausbildenden anisotropen, optischen Eigenschaften der Flüssigkristall-Druckfilme, auf alle Fälle aber einem kostenintensiven Lösungsmitteleinsatz einhergehen würde. Von großer Bedeutung ist, daß die Fließviskositäten und Oberflächenspannungen der derart behandelten Flüssigkristall-Schmelzen ideale Voraussetzungen liefern zur spontanen Ausbildung der gewünschten homogenen Texturen der Flüssigkristall-Filme.

Die geschmolzenen Flüssigkristall-Materialien weisen eine sehr gute thermische Stabilität und eine sehr hohe Kompatibilität mit den Materialien des Druckwerkes auf. Bei Verwendung von strahlungshärtenden Flüssigkristallgemischen und bei entsprechendem Lichtausschluß können sie nach Durchführung eines Druckvorganges auch ohne den Zusatz von Inhibitoren in der Farbkammer verbleiben und viele Arbeitszyklen hindurch abgekühlt und wieder auf Betriebstemperatur gebracht werden, ohne daß sie eine Zersetzung erleiden, eine spontane Polymerisation zeigen oder es zu Ablagerungen oder Verstopfungen auf den farbführenden Teilen des Druckwerkes kommt.

Verfahrenstechnisch tragen besonders die Kräfte, insbesondere Scherkräfte, welche beim Anpressen des Druckzylinders auf das Substrat, z.B. eine Folie und damit auf die Flüssigkristallkomponenten der mesomorphen Phase wirken, der Temperaturabfall von 70 °C auf ca. 20 °C durch das rasche Abkühlen auf dem Substart, sowie die Realisierung einer flexodrucküblichen Schichtdicke von ca. 0,5 bis 2 µm zur spontanen Induktion der homogenen Textur der nematischen oder chiral nematischen flüssigkristallinen Phase bei.

Dabei wird ein Druckbild erhalten, das farb- oder/und polarisationsselektive Eigenschaften aufweist. Die Abmessungen werden u. a. sowohl von dem verwendeten Klischee als auch von der Raster- und Klischeewalze vorgegeben. Der Begriff "Druckbild" bezieht sich auf Bilder und Zeichen in der Größenordnung von Bruchteilen von mm bis zu Vollflächen je nach Anforderung. Der auf Grund der geringen Betriebstemperaturen rasch mögliche Temperaturabfall auf Raumtemperatur (ca. 20 °C), die relativ geringen Schichtdicken sowie die relativ hohen Fließviskositäten der überkühlten homogen orientierten, flüssigen Texturen unterstützen die sehr rasche Stabilisierung des Druckbildes gegen ein weiteres Verlaufen auf der Substratoberfläche. Auch wird durch dieses Erstarren bei strahlungshärtenden Flüssigkristall-Mischungen vor der eigentlichen Photopolymerisation durch z.B. aktinische Strahlung ein Einsickern in die Kapillaren eines saugfähigen Bedruckstoffes, z. B. von Papier, vollständig oder weitgehend verhindert.

Eine Variation der Schichtdicken ist über die Wahl der Druckbedingungen möglich. Z. B. ergeben sich dünnere Filme bei Verwendung von Rasterwalzen mit geringerem Schöpfvolumen, bei höheren Druckgeschwindigkeiten, bei Erzeugung zusätzlicher Farbspaltungen beim Druckfarbentransport durch Integration weiterer Walzen, durch Variation des Anpreßdruckes, sowie durch die Vorgabe einer höheren Temperatur und damit geringeren Fließviskosität, soweit hierbei nicht die isotrope Phasenübergangstemperatur überschritten wird. Die Möglichkeit zur Schichtdickenreduktion ist besonders bei den nematischen Flüssigkristall-Phasen zu vorteilhaft, da sich hier schon bei Schichtdicken von weniger als 1 µm ausreichende optische Effekte ergeben und dadurch eine solche Bedruckung preisgünstig hergestellt werden kann.

Von besonderer Bedeutung ist, daß sich die farb- und polarisationsselektiven Reflexionen der Flüssigkristall-Filme auch ohne strukturbildende Behandlung z.B. Reibebehandlung des Substrats, ohne die Anwesenheit einer Orientierungsschicht, z. B. auf der Basis von Polyvinylalkohol oder Polyimid, ohne das Anlegen magnetischer oder elektrischer Felder, ohne die Behandlung der Substratoberfläche mit Alignmentadditiven oder den Zusatz dieser Additive zur Flüssigkristall-Mischung verwirklichen lassen.

Nach Durchlaufen des Druckwerks befinden sich die erfindungsgemäß erzeugten Flüssigkristall-Filme im überkühlten Zustand, kristallisieren also nicht sofort, obwohl die Umgebungstemperatur von ca. 20 °C niedriger als ihr Schmelzpunkt ist. Die optischen Effekte verändern sich über einen Zeitraum von mehr als 10 Minuten in den nicht polymerisierten Schichten nicht. Werden die Schichten bei wesentlich niedrigeren Temperaturen gehalten - beispielhaft untersucht wurde eine Temperatur von -15 °C -, ist eine Fixierung der anisotropen Effekte über mehrere Stunden möglich.Auf den Farbauftrag erfolgt der Polymerisationsprozess , der auf Grund der in diesem Beispiel radikalisch härtenden Bestandteile der Flüssigkristall-Mischung sowie der besonderen Empfindlichkeit der homogenen Textur gegenüber chemischen und physikalischen Einflüssen bevorzugt unter Inertgas (Stickstoff oder Argon) mittels UV Strahlung durchgeführt wird. Dabei entstehen Polymerfilme, deren molekularen Strukturen idealerweise in derselben Weise orientiert sind wie die (monomeren) Bestandteile der nicht polymerisierten, orientierten Flüssigkristallmischung, wodurch die anisotropen Eigenschaften erhalten bleiben.

Mitunter kommt es bei der Aushärtung der (nassen) Flüssigkristall-Filme infolge von hauptsächlich Polymerisationsschrumpfprozessen zu einer sehr leichten, aber noch sichtbaren Verschiebung der reflektierten Wellenlängen in den kurzwelligen Bereich.

Zur Aushärtung eignen sich prinzipiell alle Strahlungsquellen, die eine entsprechende UV-Ausgangsleistung in dem erforderlichen Wellenlängenbereich aufweisen. Vorzugsweise werden hier Strahlungsquellen eingesetzt, die neben einer hohen UV- Leistung keine zusätzliche Wärmebelastung auf die Flüssigkristallschicht bewirken, welches zu einer Veränderung oder Zerstörung des erzeugten optischen Effektes führen würde. In diesem Beispiel werden mehrere Quecksilberniederdrucklampen eingesetzt, die neben der reinen 254nm Quecksilber-Linie auch aufgrund von Beschichtungen des Quarzglases auch andere Wellenlängenbereiche im UV-A, UV-B und/oder UV-C aufweisen können. Auf Grund des günstigen Temperaturprofils dieser Strahlungsquellen kommt es während des Trocknungsvorganges zu keiner weiteren Wärmeeinwirkung auf die Flüssigkristall-Filme, wodurch eine weitere Beeinflußung der erzeugten optischen Effekte ausgeschlossen wird.

Vorteilhafterweise lassen sich so über eine gezielte Steuerung der applizierten Temperatur und / oder UV-Intensität die resultierenden optischen Effekte beeinflussen, so dass der Anwender z.B. bei Verwendung von chiral nematischen Flüssigkristall-Mischungen unterschiedliche Reflexionsfarben erzeugen kann.

Nach der Polymerisation weist der so erzeugte Flüssigkristallfilm den gewünschten optischen Effekt auf, wobei nun dieser Effekt nicht mehr von der Temperatur abhängt, da durch die Polymerisation ein Übergang von der Mesophase in die isotrope Phase nicht mehr möglich ist.

Bei hohen Druckgeschwindigkeiten insbesondere in Verbindung mit hohen Schichtdicken kann nach der genannten Härtung, bei welcher die optische Effekte fixiert und damit unempfindlich gegen höhere Temperaturen werden allerdings eine zusätzliche Nachhärtung mit einer weiteren gegebenenfalls leistungsstärkeren UV-Strahlungsquelle erforderlich sein, um nicht polymerisierte Reste innerhalb des Flüssigkristall-Filmes ebenfalls zu polymerisieren.

Die Substrate, z.B. Folien können in diesem Fall mittels einer Kühlwalze gekühlt werden. Die Nachhärtung kann unter Anwesenheit von Sauerstoff beispielsweise an Luft durchgeführt werden, ohne daß die homogene Textur des Flüssigkristallfilms nachteilig beeinflußt wird, da dieser nach erfolgter Vorhärtung nur sehr wenig empfindlich gegenüber Wärme oder einer Inhibierung seiner (weiteren) Polymerisation durch Sauerstoff ist.

Als Substrate finden alle üblicherweise bedruckbaren Druckträger, wie Papier, Kartonagen und verschiedene Kunststoff-Folien, wie z. B. Polyolefine oder Zellglas, und Metallfolien, wie z. B. Aluminiumfolie, Verwendung.

Im Falle der chiral nematischen Flüssigkristalle ist das Substrat vorzugsweise geschwärzt, so daß entgegengesetzt zirkular polarisiertes Licht beziehungsweise solches mit abweichender Wellenlänge absorbiert wird. Bei den nematischen Flüssigkristallen eignen sich alle reflektierenden, z. B. mit Aluminium oder Aluminiumfarben beschichteten Folien. Das Kunststoffmaterial oder die Beschichtung des Substrats muß bevorzugt bis zu einer Temperatur von ca. 80 °C thermisch stabil sein, doch eignen sich auch solche thermoplastischen Materialien, die zumindest teilweise mit der Flüssigkristall-Beschichtung verschmelzen können. Dies ist im Hinblick auf eine erhöhte Anhaftung der Flüssigkristall-Filme an die jeweiligen Medien vorteilhaft. Jedoch kann zu diesem Zwecke auch eine Coronabehandlung des Substrats nützlich sein.

In einer besonderen Ausführungsform kommen zwei Druckwerke jeweils ausgestattet mit einem UV-Trockner zum Einsatz, wobei sich der erste UV-Trockner zwischen den beiden Druckwerken, der zweite UV-Trockner hinter dem zweiten Druckwerk befindet. Auf diese Weise können zwei verschiedene heißschmelzende Farben, vorzugsweise zwei Flüssigkristallgemische unterschiedlicher Zusammensetzung, z. B. solche mit entgegengesetzter Chiralität, verdruckt werden. Dadurch kann ein unsichtbares Muster, z. B. ein Logo oder Wappen, erzeugt werden, welches nur durch einen geeigneten Polarisator sichtbar gemacht werden kann. Die beiden Flüssigkristall-Gemische können aber auch chemisch und optisch identisch sein, wobei dann z. B. durch Variation der UV-Intensität und/oder der Temperatur während der Härtung der beiden UV-Trockner ein mehrfarbiges Bild geschaffen wird.

In einer weiteren Variante wird anstelle eines beheizbaren Flexodruckwerkes ein thermischer, kommerziell erhältlicher Tintenstrahldrucker eingesetzt und man verdruckt die Flüssigkristallmischungen als Heißschmelztinten im Drop on Demand-Verfahren, indem Tröpfchen der betrefffenden geschmolzenen Flüssigkristall-Mischung in einem abbildungsartigen Muster auf ein Substrat, wie z. B. Papier oder eine Kunststoff -Folie gespritzt werden. Im Unterschied zum herkömmlichen, oben beschriebenen Flexodruckverfahren besteht hier der besondere Vorteil in der freien Programmierbarkeit der Druckbilder.

Darüberhinaus gestattet das erfindungsgemäße Verfahren die Kombination von Heißschmelztintenstrahl- und klischeegebundenem Druck in der Weise, daß ein mittels klischeegebundenen Druckverfahren aufgebrachter Flüssigkristallfilm ohne weitere Zwischenhärtung mittels Heißschmelztintenstrahlverfahren berührungsfrei zusätzlich bedruckt wird (Naß-in-naß-Druck).

Die erfindungsgemäß aufgebrachte erste Druckschicht besitzt eine so hohe Viskosität und Stabilität, daß die Applikation von Farbtröpfchen möglich ist, ohne daß die erste Druckschicht in ihrer Form modifiziert wird.

Die Flüssigkristall-Tröpfchen orientieren sich durch die beim Aufprall wirksamen Kräfte sowie die Temperaturemiedrigung sehr rasch, verharren genügend lange im überkühlten Zustand und es kommt zu keinem unerwünschten "Bluten" auf der Oberfläche. Auf Grund der chemischen Kompatibilität der beiden Flüssigkristall-Filme ist zwischen ihnen eine ausgeprägte Kohäsion möglich. Dagegen würde die Bedruckung eines ungehärteten ersten Druckfilms mit lösungsmittelhaltigen Flüssigkristall-Tröpfchen zu einer schädlichen Durchdringung und Vermischung der beiden Flüssigkristall-Filme infolge von Diffusions- und Extraktionsprozessen führen und es tritt vorzugsweise das Phänomen des "Blutens" auf.

Die so erzeugten kombinierten Schichten weisen aufgrund der lokal unterschiedlich dicken Schichten oder aufgrund von unterschiedlicher Zusammensetzung der verwendeten Flüssigkristallmischungen unterschiedliche optische Effekte auf.

Der Einsatz solcher Tinten in Tintenstrahldruckern beschränkt sich dabei nicht auf piezobetriebene Druckverfahren, bei welchen die Tintentropfen durch Kontraktion und Expansion eines hinter der Düse angebrachten Piezoelementes ausgestossen werden, sondern es lassen sich auch thermische Tintenstrahldrucker verwenden. In diesem Fall wird den Flüssigkristallen dann vorzugsweise Gemische aus Wasser und Polyhydroxyverbindungen, wie z. B. Ethylenglykol, Diethylenglykol, Propylenglykol und Glycerin, als blasenbildende Additive zugesetzt, welche durch Verdampfung in den Druckköpfen die Tropfen aus den Düsen austreiben.

In einer weiteren Variante erzeugt man in dem Drucksubstrat einen Prägedruck, indem z. B. das mit dem Flüssigkristall-Material zu bedruckende Substrat in die Vertiefungen eines gravierten Gegendruckzylinders hineingepreßt und auf diese Weise dauerhaft verformt wird. Wenn z. B. ein Teil der Prägung die Form einer schiefen Ebene aufweist, kann ein zusätzlicher betrachtungswinkelabhängiger Farbeindruck hervorgerufen werden.

Beispielhaft für ein Beschichtungsverfahren wird in einer weiteren Ausführungsform eine chiral nematogene Flüssigkristallmischung in eine auf 70 °C beheizte Hochdruckspritzpistole gefüllt und die chiral nematische Flüssigkristallschmelze z.B. mit einem Druck von 3 bar in Form eines Spritznebels auf eine schwarz lackierte Metalloberfläche appliziert. Der Lackiervorgang wird solange wiederholt, bis eine einheitliche, gleichmäßig bedeckte Oberfläche erhalten wird. Beheizt man zusätzlich das Metall, so können infolge der Abhängigkeit der helikalen Ganghöhen von der Temperatur verschiedene Reflexionswellenlängen realisiert werden. Anschließend kann mit UV-Licht und unter Stickstoff ausgehärtet werden.

Die nach einem der vorstehend beschriebenen Verfahren angefertigten Drucke und Beschichtungen haben einwandfreie Oberflächen, ausgezeichnete Haftungseigenschaften und Kratzfestigkeiten.

Die vorliegende Erfindung ist nicht auf die beschriebenen, speziellen Ausführungsformen beschränkt da eine derartige Anwendung von Flüssigkristall-Materialien auf viele Industriezweige möglich ist.

## Patentansprüche

1. Verfahren zum Auftragen von Flüssigkristalle umfassenden Mitteln auf Substrate **dadurch gekennzeichnet, daß** vor einem Auftrag in einer Mischapparatur nematogene und/oder chiral nematogene FlüssigkristallKomponenten homogenisiert werden, das homogenisierte Mittel nach Erstarren zu einer mikrokristallinen Masse zerkleinert und zum Auftragen In einer Farbkammer aufgeschmolzen wird und das Mittel innerhalb einer Auftragsvorrichtung auf einerArbeitstemperatur gehalten wird, bei der das Mittel in einem flüssigen Zustand und die im Mittel enthaltenen Flüssigkristallkomponenten in einem mesomorphen Zustand vorliegen.

2. Verfahren nach Anspruch 1, **dadurch gekennzeichnet, dass** das Mittel mittels eines Druckverfahrens oder Beschichtungsvedahrens auf ein Substrat aufgebracht wird,

3. Verfahren nach einem der vorherigen Ansprüche, **dadurch gekennzeichnet, dass** durch Kräfte, welche beim Anpressen eines Druckzylinders auf ein Substrat und damit auf die Flüssigkristallkomponenten wirken, eine Orientierung der Flüssigkristalle erfolgt.

4. Verfahren nach einem der vorherigen Ansprüche, **dadurch gekennzeichnet, dass** durch einen Temperaturabfall der Flüssigkristalle auf dem Substrat eine Orientierung der Flüssigkristalle erfolgt.

5. Verfahren nach einem der vorherigen Ansprüche, **dadurch gekennzeichnet, dass** nach Durchlaufen des Druckwerks sich die erzeugten Flüssigkristall-Filme im überkühlten Zustand befinden.

6. Verfahren nach einem der vorherigen Ansprüche, **dadurch gekennzeichnet, dass** ein bedrucktes Substrat mittels einer Kühlwalze gekühlt wird.

7. Verfahren nach einem der vorherigen Ansprüche, **dadurch gekennzeichnet, dass** nach dem Auftrag eines Mittels sich ein Trocknungsprozeß anschließt.

8. Verfahren nach Anspruch 7, **dadurch gekennzeichnet, dass** die Temperatur des Trocknungsprozesses einstellbar ist.

9. Verfahren nach Anspruch 7, **dadurch gekennzeichnet, dass** die Trocknung mittels UV-Strahlungsquellen erfolgt.

10. Verfahren nach Anspruch 9, **dadurch gekennzeichnet, dass** die Bestrahlungsstärke der UV-Strahlungsquellen einstellbar ist.

## Claims

1. Method for applying compositions comprising liquid crystals to substrates, **characterized in that** nematogenic and/or chirally nematogenic liquid crystal components are homogenized in a mixing apparatus prior to application, the homogenized composition is comminuted to a microcrystalline material after solidification and is melted in an ink chamber for application and the composition is kept, within an application apparatus, at a working temperature at which the composition is present in a liquid state and the liquid crystal components present in the composition are present in a mesomorphic state.

2. Method according to Claim 1, **characterized in that** the composition is applied to a substrate by means of a printing process or coating process.

3. Method according to either of the preceding claims, **characterized in that** orientation of liquid crystals is effected by forces which act during pressing of a printing cylinder on a substrate and hence on the liquid crystal components.

4. Method according to any of the preceding claims, **characterized in that** orientation of the liquid crystals is effected by a temperature drop of the liquid crystals on the substrate.

5. Method according to any of the preceding claims, **characterized in that** the liquid crystal films produced are present in the supercooled state after passing through the printing unit.

6. Method according to any of the preceding claims, **characterized in that** a printed substrate is cooled by means of a chill roll.

7. Method according to any of the preceding claims, **characterized in that** the application of a composition is followed by a drying process.

8. Method according to Claim 7, **characterized in that** the temperature of the drying process is adjustable.

9. Method according to Claim 7, **characterized in that** the drying is effected by means of UV radiation sources.

10. Method according to Claim 9, **characterized in that** the irradiance of the UV radiation sources is adjustable.

## Revendications

1. Procédé pour appliquer des produits comprenant des cristaux liquides sur des substrats, **caractérisé en ce que**, avant une application, dans un appareil de mélange, on procède à une homogénéisation de composants de cristaux liquides nématogènes et/ou nématogènes chiraux, le produit homogénéisé, après solidification, est broyé en une masse microcristalline et porté à fusion, pour application dans une chambre d'encrage, et le produit se trouvant dans un dispositif applicateur est maintenu à une température de travail, à laquelle le produit se présente en un état liquide et les composants de cristaux liquides contenus dans le produit se présentent en un état mésomorphe.

2. Procédé selon la revendication 1, **caractérisé en ce que** le produit est appliqué sur un substrat au moyen d'un procédé d'impression ou d'un procédé de revêtement.

3. Procédé selon l'une des revendications précédentes, **caractérisé par** des forces, agissant lors du pressage d'un cylindre d'impression sur un substrat et, ainsi, sur les composants de cristaux liquides, en produisant une orientation des cristaux liquides.

4. Procédé selon l'une des revendications précédentes, **caractérisé en ce qu'**une orientation des cristaux liquides sur le substrat s'effectue par une chute de température des cristaux liquides.

5. Procédé selon l'une des revendications précédentes, **caractérisé en ce que** les films de cristaux liquides produits se trouvent à l'état sur-refroidi, après passage du groupe d'impression.

6. Procédé selon l'une des revendications précédentes, **caractérisé en ce qu'**un substrat imprimé est refroidi au moyen d'un rouleau de refroidissement.

7. Procédé selon l'une des revendications précédentes, **caractérisé en ce qu'**un processus de séchage est entrepris après l'application d'un produit.

8. Procédé selon la revendication 7, **caractérisé en ce que** la température du processus de séchage est réglable.

9. Procédé selon la revendication 7, **caractérisé en ce que** le séchage est effectué au moyen de sources de rayonnement UV.

10. Procédé selon la revendication 9, **caractérisé en ce que** l'intensité d'irradiation des sources de rayonnement UV est réglable.
